# FASCICULE DE BREVET EUROPEEN

(11) **EP 1 432 184 B1**
(45) Date de publication et mention de la délivrance du brevet: **18.04.2012**
(21) Numéro de dépôt: 03292852.5
(22) Date de dépôt: 17.11.2003
(51) Int. Cl.: H04L 12/56

(54) **Dispositif de détermination de chemins de communication dans un réseau de communications à commutation d'étiquettes, en présence d'attributs de sélection**
Vorrichtung zur Ermittlung eines Nachrichtenpfades in einem etikettvermittelndem Kommunikationsnetzwerk mit vorhandenen Auswahlattributen
Apparatus for determining communication paths in a label switching communication network having selection parameters

(30) Priorité: 17.12.2002 FR 0215966
(43) Date de publication de la demande: 23.06.2004
(73) Titulaire: Alcatel Lucent, 75007 Paris (FR)
(72) Inventeur: Randriamasy, Claire-Sabine, 92190 Meudon (FR); El Mghazli, Yacine, 94110 Arcueil (FR)
(74) Mandataire: Sciaux, Edmond

(56) Documents cités:
- WO-A-02/03716
- US-A- 6 034 946
- US-B1- 6 301 244
- ROUHANA N ET AL: "Differentiated services and integrated services use of MPLS" , 3 juillet 2000 (2000-07-03), pages 194-199, XP010505346
- CHEN ET AL.: "Distributed Quality-of-service routing in High speed networks basec on selective probing" PROCEEDINGS 23RD CONFERENCE ON LOCAL COMPUTER NETWORKS; IEEE COMPUTER SOCIETY, [en ligne] 11 - 14 octobre 1998, pages 80-89, XP002253004 , Boston, Massachusetts, USA Extrait de l'Internet: <URL:http://citeseer.nj.nec.com/chen99dist ributed.html> [extrait le 2003-09-01]
- CHEN S ET AL: "AN OVERVIEW OF QUALITY OF SERVICE ROUTING FOR NEXT-GENERATION HIGH-SPEED NETWORKS: PROBLEMS AND SOLUTIONS" IEEE NETWORK, IEEE INC. NEW YORK, US, vol. 12, no. 6, novembre 1998 (1998-11), pages 64-79, XP000873129 ISSN: 0890-8044
- ZHENG WANG ET AL: "QUALITY-OF-SERVICE ROUTING FOR SUPPORTING MULTIMIDEA APPLICATIONS" IEEE JOURNAL ON SELECTED AREAS IN COMMUNICATIONS, IEEE INC. NEW YORK, US, vol. 14, no. 7, 1 septembre 1996 (1996-09-01), pages 1228-1234, XP000626273 ISSN: 0733-8716
- KORKMAZ T ET AL: "An efficient algorithm for finding a path subject to two additive constraints" COMPUTER COMMUNICATIONS, ELSEVIER SCIENCE PUBLISHERS BV, AMSTERDAM, NL, vol. 25, no. 3, 15 février 2002 (2002-02-15), pages 225-238, XP004313430 ISSN: 0140-3664

## Description

L'invention concerne le domaine des communications entre terminaux au sein d'un réseau à commutation d'étiquettes, et plus particulièrement celui de la détermination des chemins (ou trajets) de commutation de flux de données entre un équipement de commutation dit « de départ » et un équipement de commutation dit « de destination ».

Comme le sait l'homme de l'art, un réseau dit « à commutation d'étiquettes » (ou « switched label networks »), comme par exemple MPLS ou GMPLS, comprend des équipements (ou noeuds) de commutation, également appelés routeurs de commutation d'étiquettes (ou LSRs pour « Label Switched Routers »). Les LSRs désignent deux types de routeurs ou commutateurs couplés entre eux : les routeurs périphériques (ou LERs pour « Label Edge Routers »), chargés d'établir un chemin de commutation d'étiquettes (ou LSP pour « Label Switched Path ») pour chaque flux de données qu'ils reçoivent lorsque le gestionnaire du réseau le leur demande, et les routeurs de coeur (ou LCRs pour « Label Core Routers »), uniquement chargés de la commutation des flux de données et de la transmission des données d'information du réseau.

L'établissement d'un chemin commuté consiste à adjoindre aux données d'un flux une étiquette associée au chemin à suivre et à réserver les ressources nécessaires à l'acheminement du flux jusqu'au noeud de destination compte tenu du type de service (ou ToS pour « Type of Service ».) et/ou de la qualité de service (ou QoS pour « Quality of Service ») qui est (sont) associé(s) à ce flux. Afin que chaque LER de départ puisse établir un chemin, chaque flux est donc associé à un LER de départ et un LER de destination, à une classe d'équivalence de transmission (ou FEC pour « Forwarding Equivalence Class ») et à un ensemble de données de service définissant le type de service (ou ToS) et/ou la qualité de service (ou QoS).

Le calcul d'un chemin commuté LSP s'effectue soit à partir de la détermination du chemin le plus court entre les noeuds de départ et de destination, soit à partir de l'énumération d'un ensemble de noeuds qu'il doit obligatoirement comporter.

A partir de la liste des noeuds produite par le calcul, un processus dit de signalisation établit le chemin commuté après en avoir validé les étapes compte tenu de contraintes liées à la QoS et/ou ToS requise pour le flux.

Dans la première situation, l'emploi d'un unique critère (ou attribut) de sélection, tel que la longueur du chemin (ou le nombre de sauts), a généralement pour conséquence de diriger la plus grande partie du trafic suivant un même chemin, qui se trouve de ce fait encombré, alors même que de nombreux autres chemins, qui pourraient s'avérer mieux adaptés compte tenu d'autres critères que la longueur, restent sous-utilisés. De plus, la présence de contraintes limite le choix de liens possibles et peut accentuer l'encombrement. En outre, la longueur du chemin n'est pas nécessairement le critère le plus important. D'autres critères peuvent s'avérer beaucoup plus pertinents dans certaines applications, comme par exemple la bande passante requise.

Dans la seconde situation, le recours à un ensemble explicite de noeuds obligatoires compte tenu d'une contrainte peut permettre d'éviter les problèmes de réservation de ressources mais ne facilite pas l'automatisation du calcul. De plus, cette méthode de calcul appelée « explicit routing », stricte ou relâchée, repose généralement sur des connaissances empiriques qui en limitent la fiabilité.

Pour tenter d'améliorer la situation, il a été proposé d'effectuer de façon séquentielle le calcul du chemin commuté compte tenu d'un unique critère, puis de procéder à des vérifications compte tenu d'une ou plusieurs contraintes. Mais, cette méthode requiert beaucoup de temps de calcul dans la mesure où le LSP initialement calculé (généralement le plus court) ne dispose pas nécessairement des ressources adaptées aux contraintes liées à la qualité de service associée au flux à router et/ou n'appartient pas à la classe administrative associée au flux à router.

Par ailleurs, l'article Differentiated Services and integrated services use of MPLS» expose des méthodes de détermination de chemins de commutation de flux de données non étiquetés, dans un réseau de communication. Ces méthodes prévoient des moyens de traitement agencés pour déterminer des chemins possibles compte tenu d'au moins deux critères pour déduire un chemin optimisé.

Une méthode utilisée pour trouver le chemin optimal dans un ensemble de chemins possible est décrit dans la demande de brevet WO02/03716.

Dans l'état de l'art, les protocoles d'optimisation sont préprogrammés et optimise donc toujours les mêmes paramètres (bande passante, délai, etc.) Un besoin existe toutefois de pouvoir choisir les paramètres, d'optimisation en fonction des données présentées.

Par exemple, l'optimisation du délai total est importante pour la transmission vocale, l'optimisation du délai de tampon (*queuing delay*) l'est pour la transmission de signal vidéo large bande et finalement l'optimisation de la bande passante l'est lors de transfert de fichier, voir par exemple le brevet US 6,034,946.

Le document « *Distributed Quality of Service Routing in High Speed* Networks based on Selective Probing, Proceedings 23rd Conference on Local Computer Networks, *IEEEE* Computer Society propose un méta-algorithme d'optimisation de routage QoS incorporant un ensemble d algorithmes de routage optimisant différents critères cependant complexe et coûteux en ressources et donc posant d'autres problèmes encore.

L'invention a donc pour but de remédier à tout ou parties des inconvénients précités.

Elle propose à cet effet un dispositif de détermination d'un ou de plusieurs chemins de commutation de flux de données étiquetés dans un réseau de communications à commutation d'étiquettes comportant une multiplicité de noeuds de commutation d'étiquettes (ou LSRs), parmi lesquels des LERs et des LCRs.

Ce dispositif se caractérise par le fait qu'il comporte :
- des moyens de mémorisation stockant une table de correspondance entre des ensembles de données de service (par exemple représentatifs d'un type de service et/ou d'une qualité de service) et des données d'informations représentatives d'au moins deux critères choisis (ainsi qu'éventuellement des facteurs de pondération reflétant l'importance relative de ces critères), et une structure descriptive de données d'informations représentatives de l'état d'utilisation et de la topologie du réseau,
   lesdites données de service définissant le type de service et/ou la qualité de service,
- des moyens de traitement chargés :
   a) à réception d'une requête d'établissement de chemin contenant un ensemble de données de service associé à un flux à commuter, de déterminer dans la table au moins deux critères stockés en correspondance dudit ensemble de données de service associé au flux,
   b) de s'assurer, à partir de données d'informations représentatives de l'état d'utilisation et de la topologie du réseau, stockées dans la structure descriptive, de la connexité de la multiplicité de LSRs,
   c) de calculer parmi les LSRs des chemins possibles entre un LER de départ et un LER de destination, compte tenu d'au moins les deux critères déterminés, puis de déduire une solution idéale à partir de performances de ces chemins possibles sur au moins les critères,
   d) d'attribuer à chaque chemin possible une valeur d'intérêt compte tenu de la solution idéale, puis de classer les chemins possibles compte tenu de leurs valeurs d'intérêt respectives, et
   e) de sélectionner un chemin parmi les chemins possibles classés, puis d'associer au flux à commuter une étiquette représentative dudit chemin sélectionné afin que ce flux étiqueté soit commuté via le chemin vers le LER de destination.

Par définition, deux noeuds sont dits « connexes » s'ils peuvent s'échanger des données directement ou indirectement par l'intermédiaire d'un ou plusieurs autres noeuds. Autrement dit, si l'on considère un graphe de noeuds, ce graphe est dit connexe si chaque couple de noeuds peut être relié par un chemin.

Le dispositif selon l'invention qui peut servir, dans le mode de base présenté ci-dessus, à l'établissement de chemins commutés dans un premier mode multi-critères qui se caractérise par la prise en compte de critères en l'absence de contraintes, peut également servir à l'établissement de chemins commutés dans un second mode multi-critères qui se caractérise par la prise en compte de critères en présence de contrainte(s). Pour ce faire, les moyens de traitement peuvent, lorsque certaines données d'informations, associées à un ensemble de données de service, sont représentatives d'au moins une contrainte locale, déterminer parmi la multiplicité de LSRs, tous les couples de LSRs qui peuvent établir entre eux une liaison orientée supportant chaque contrainte locale stockée en correspondance d'un ensemble de données de service associé au flux à commuter, puis s'assurer de la connexité de l'ensemble des LSRs des couples.

En variante ou en complément, les moyens de traitement peuvent, lorsque certaines données d'informations, associées à un ensemble de données de service, sont représentatives d'au moins une contrainte globale, ne retenir parmi les chemins possibles que ceux qui satisfont à chaque contrainte globale stockée en correspondance d'un ensemble de données de service associé au flux à commuter, afin de n'attribuer des valeurs d'intérêt qu'aux chemins possibles retenus.

On entend ici par « contrainte locale » une contrainte appliquée sur des liens (ou liaisons) orienté(e)s, tels que des arcs. Par ailleurs, on entend ici par « contrainte globale » une contrainte appliquée sur un chemin, comme par exemple le nombre de sauts du chemin ou la durée maximale du chemin.

Préférentiellement, au moins l'un des critères utilisés est de type non additif. Dans ce cas, il est avantageux que les moyens de traitement intègrent, lors du calcul des chemins possibles et de la déduction de la solution idéale, une trace mémorisant un parcours correspondant à un chemin partiel, de manière à détecter et prévenir l'apparition de cycles (ou boucles) dans les chemins en cours de construction. Et, il est encore plus avantageux que les moyens de traitement conservent certaines solutions, dites « faiblement non dominées » sur chaque critère déterminé, non additif, lors de la procédure d'élimination des chemins partiels.

Les moyens de traitement du dispositif selon l'invention pourront comporter d'autres caractéristiques complémentaires qui pourront être prises séparément et/ou en combinaison, et en particulier ils pourront :
- vérifier la connexité (qui est une contrainte) par un mécanisme de propagation du noeud (ou LER) de départ vers tous les autres noeuds de la multiplicité de noeuds, afin que chaque noeud soit visité. Pour ce faire, ils peuvent, par exemple, utiliser l'algorithme de Tarjan ;
- déterminer pour chaque chemin des valeurs représentatives de leur « performance » par rapport à chacun des critères déterminés, puis qualifier de chemin possible chaque chemin dont les valeurs de performance sont « non dominées ». Dans ce cas, ils peuvent également déterminer pour chaque critère, la meilleure valeur de performance observée sur les chemins possibles, dite « valeur optimale », puis construire la solution idéale sous la forme d'un multiplet de composantes constituées des différentes valeurs optimales déterminées. En fait, les liaisons sur lesquelles les valeurs optimales sont observées constituent rarement une séquence connexe. Autrement dit, un chemin idéal correspondant à une solution idéale n'existe qu'exceptionnellement ;
- attribuer la valeur d'intérêt à chaque chemin possible qui caractérise la plus grande valeur des composantes, associées aux différents critères déterminés, d'une fonction de Tchebychev pondérée, fonction des différences entre la valeur de performance du chemin concerné et la composante correspondante de la solution idéale. Dans ce cas, ils peuvent présélectionner k chemins possibles qui présentent les k plus petites valeurs d'intérêt, puis procéder à la sélection d'un chemin parmi ces k chemins présélectionnés. En outre, ils peuvent, si nécessaire, calculer des chemins bidirectionnels. De plus, ils peuvent sélectionner parmi les k chemins au moins un autre chemin dédié à la restauration de liaison.

Par ailleurs, il est préférable que :
- les éventuelles contraintes locales et/ou globales appartiennent à un groupe comprenant au moins la bande passante minimale requise, la longueur maximale du chemin, la durée maximale du chemin, une ou plusieurs liaisons interdites, le nombre minimal et/ou maximal de sauts du chemin, un ou plusieurs noeud(s) obligatoire(s), un ou plusieurs noeud(s) interdit(s), une ou plusieurs classes de service autorisées, une ou plusieurs couleurs de chemin, une capacité de multiplexage en longueurs d'onde, une capacité de concaténation, une capacité d'allocation et une capacité de protection ;
- les critères appartiennent à un groupe comprenant au moins la bande passante disponible, le nombre de sauts du chemin, la durée du chemin, une capacité de multiplexage en longueurs d'onde, une capacité de concaténation, une capacité d'allocation et une capacité de protection. Dans ce cas, il est encore plus préférable que les deux critères soient la bande passante disponible et la durée du chemin. Dans ce cas, les moyens de traitement peuvent avantageusement impacter (ou pondérer) le critère portant sur la durée du chemin par une pénalité portant, par exemple, sur le coût d'administration du chemin ;
- les critères soient pondérés en fonction de leur importance compte tenu d'informations de gestion. Dans ce cas, les facteurs de pondération sont préférentiellement stockés dans la table de correspondance, associés à certains au moins des critères.

L'invention porte également sur un routeur de commutation d'étiquettes équipé d'un dispositif du type de celui présenté ci-avant.

Par ailleurs, l'invention est particulièrement bien adaptée aux réseaux de communications à commutation d'étiquettes, tels que MPLS (« MultiProtocol Label Switching ») qui traite des flux constitués de paquets ou cellules de données asynchrones, et GMPLS (« Generalized MPLS ») qui traite des flux constitués non seulement de paquets ou cellules de données asynchrones mais également de trames (ou « frames ») synchrones ou de flux de lumière (ou « light streams »).

D'autres caractéristiques et avantages de l'invention apparaîtront à l'examen de la description détaillée ci-après, et des dessins annexés, sur lesquels :
- la figure 1 illustre de façon schématique une partie d'un réseau de communications à commutation d'étiquettes comportant une multiplicité de routeurs (ou noeuds) périphériques (LERs) équipés d'un dispositif de calcul de chemins de commutation selon l'invention, et
- la figure 2 est un graphe illustrant de façon schématique le mode de détermination de solutions dites « non dominées ».

Les dessins annexés pourront non seulement servir à compléter l'invention, mais aussi contribuer à sa définition, le cas échéant.

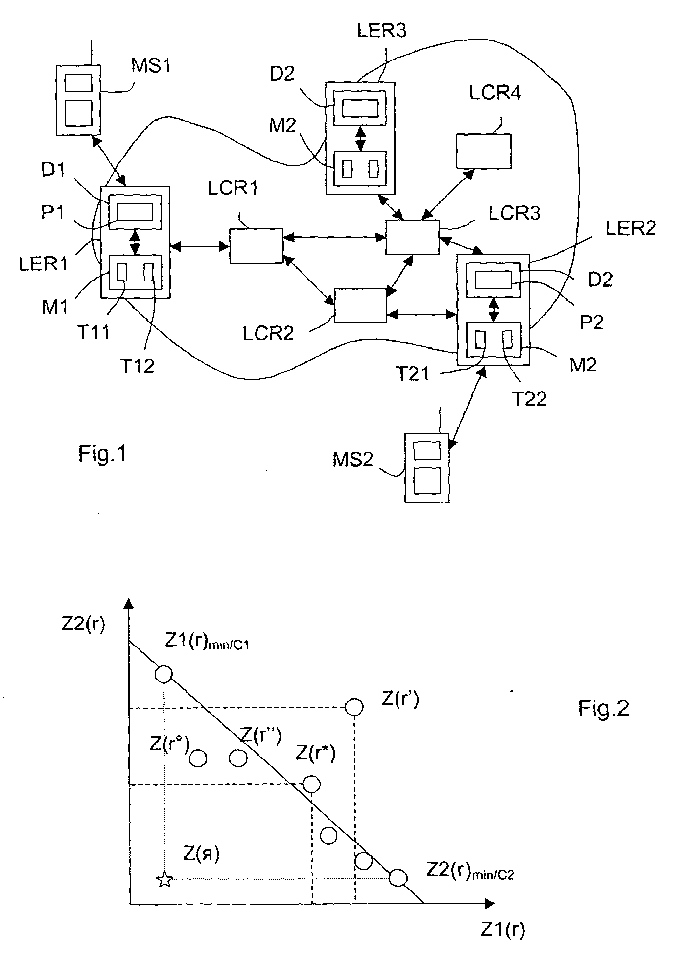

Un réseau de communications à commutation d'étiquettes (ou « Label Switched Network ») comporte généralement, comme illustré sur la figure 1, une multiplicité de routeurs (ou noeuds) de commutation d'étiquettes (ou LSRs pour « Label Switched Routers ») couplés entre eux. Ces LSRs peuvent être regroupés en deux catégories : les routeurs périphériques (ou LERs pour « Label Edge Routers ») LERn (ici n = 1 à 3), et les routeurs de coeur (ou LCRs pour « Label Core Routers ») LCRm (ici m = 1 à 4). Comme on le verra plus loin, les LERs sont chargés d'établir des chemins de commutation au sein du réseau tandis que les LCRs sont chargés de la commutation.

Une multiplicité de terminaux d'utilisateurs ou d'entreprises MSk (ici k = 1 et 2) sont susceptibles de se raccorder à certains au moins des LERs afin de pouvoir échanger des données entre eux.

Dans ce qui suit, on considère que le réseau est de type MPLS (« MultiProtocol Label Switching »). Mais bien entendu, l'invention n'est pas limitée à ce seul type de réseau à commutation d'étiquettes. Elle concerne d'une manière générale tous les types de réseaux à commutation d'étiquettes, comme par exemple les réseaux de type GMPLS (« Generalized MultiProtocol Label Switching »).

Par ailleurs, dans ce qui suit on considère que les terminaux MSk sont des stations mobiles, telles que des téléphones mobiles. Mais, il pourrait s'agir de tout type de terminal de communications capable d'échanger des données avec d'autres terminaux ou équipements de réseau, comme par exemple des téléphones fixes, des télécopieurs, des assistants numériques personnels (ou PDA pour « Personal Digital Assistant »), des ordinateurs fixes ou portables ou des serveurs de fournisseurs de contenus (ou ASP pour « Application Service Provider »).

L'invention est destinée à permettre la détermination de chemin(s) de commutation multi-critères, avec ou sans contrainte(s), de flux de données étiquetés au sein d'un réseau à commutation d'étiquettes (ici de type MPLS).

L'invention propose à cet effet au moins un dispositif de calcul Dn comportant un module de traitement Pn, chargé de déterminer le meilleur chemin commuté, de type LSP, entre un LER de départ et un LER de destination, compte tenu d'au moins deux critères, ainsi qu'éventuellement de contrainte(s). Le calcul du chemin peut être déclenché de façon centralisée (en mode automatique ou en mode manuel (ou interactif)) ou de façon distribuée (en mode automatique), par l'intermédiaire d'une requête d'établissement de flux à commuter.

On entend ici par « chemin commuté » une suite ordonnée de noeuds (ou LSRs) ou de liaisons (entre deux noeuds ou LSRs) ayant pour début un LER de départ et pour fin un LER de destination. Bien entendu, un nouveau calcul de chemin peut être effectué chaque fois que l'on parvient au niveau d'un LER de destination d'une zone (ou domaine) du réseau, décrite dans une structure descriptive de données (sur laquelle on reviendra plus loin), afin de poursuivre l'acheminement d'un flux de données. Par conséquent, seuls les LERs d'un réseau de type MPLS sont aptes à établir un chemin de commutation déterminé par un dispositif selon l'invention D et conformément au protocole de commutation distribué du réseau.

Le dispositif Dn assurant préférentiellement, comme on le verra plus loin, l'étiquetage effectif d'un flux une fois son chemin déterminé, il est donc préférable qu'il soit implanté dans chaque LERn du réseau MPLS, comme cela est illustré sur la figure 1. Par conséquent, dans ce qui suit on considère que le dispositif D1, implanté dans le routeur périphérique LER1, auquel est connecté un terminal MS1 qui souhaite établir une communication avec un terminal MS2 raccordé au routeur périphérique LER2, reçoit l'ordre de déterminer un chemin commuté entre le routeur de départ LER1 et un routeur de destination, par exemple LER2.

Par ailleurs, dans ce qui suit, on va décrire un exemple de réalisation du dispositif selon l'invention Dn, dans le cas de l'établissement d'un chemin commuté multicritères en présence de contrainte(s) locale(s) et/ou globale(s). Mais, comme mentionné précédemment, le dispositif Dn est également adapté à l'établissement d'un chemin commuté multicritères en l'absence de contrainte.

Il est tout d'abord rappelé que dans un réseau à commutation d'étiquettes, chaque flux de données est associé à un LER de départ et un LER de destination, à une classe d'équivalence de transmission (ou FEC pour « Forwarding Equivalence Class ») et à un ensemble de données de service définissant le type de service (ou ToS pour « Type of Service ») et/ou la qualité de service (ou QoS pour « Quality of Service »). Il est également rappelé que dans un réseau à commutation d'étiquettes, toutes les données d'un flux qui possèdent une même FEC doivent suivre un même chemin (LSP). L'association d'un flux à commuter à une FEC est effectuée par le LER d'entrée.

Le module de traitement P1, du dispositif D1, est tout d'abord chargé, lorsqu'il reçoit une requête d'établissement de chemin contenant un ensemble de données de service associé à un flux à commuter, d'extraire cet ensemble de données de service, puis d'accéder à une mémoire M1, dans laquelle se trouve stockée une table T11 établissant des correspondances entre des ensembles de données de service (par exemple représentatifs d'un type de service et/ou d'une qualité de service) et des données d'informations représentatives d'au moins deux critères choisis.

Préférentiellement, la mémoire M1 est implantée dans le routeur LER1. En d'autres termes, il est préférable de prévoir une mémoire Mn dans chaque routeur périphérique LERn. Mais, en variante on pourrait prévoir une unique mémoire « centrale » accessible à chaque dispositif Dn.

Une fois qu'il a déterminé dans la table T11 l'ensemble de données de service qui correspond à l'ensemble extrait, le module de traitement P1 peut extraire de cette table T11 toutes les données d'informations qui lui sont associés, et notamment les deux critères au moins.

Il est important de noter que chaque critère peut être associé à un facteur de pondération représentant son niveau de préférence relativement aux autres critères. Ces facteurs de pondération sont préférentiellement stockés dans la table de correspondance T11, associés aux critères correspondants.

Une fois qu'il a déterminé les critères, ainsi que les contraintes, associés au flux à commuter, le module de traitement P1 interroge une structure descriptive de données d'information T12, stockée, de préférence, dans la mémoire M1 et comportant des données d'informations représentatives de l'état d'utilisation et de la topologie du réseau, afin de s'assurer de la connexité de la multiplicité de LSRs du réseau.

Ces données d'informations définissent notamment les ressources associées aux différentes liaisons entre noeuds, en terme de caractéristiques et de disponibilités, ainsi que la liste des noeuds LSRs, régulièrement mise à jour. Parmi les caractéristiques des ressources on peut notamment citer la topologie (liens disponibles), la bande passante, et la durée de transit entre deux noeuds d'une liaison. Ces informations sont généralement fournies par un protocole d'état de liaison tel qu'OSPF (pour « Open Shortest Path First ») lorsque que celui-ci supporte une gestion de trafic par échange de TE-LSAs (pour « Trafic Engineering - Link State Advertisements »). D'autres caractéristiques d'utilisation du réseau, telles que les couleurs autorisées sur une liaison, les classes de service autorisées, ou le coût administratif d'une liaison, sont fournies par le système de gestion du réseau (ou NMS pour « Network Management System »).

Pour s'assurer de la connexité de l'ensemble des noeuds (LSRs), le module de traitement P1 détermine tous les couples de noeuds (LSRs) qui peuvent établir entre eux une liaison (ou un lien, défini par un couple (i,j) désignant deux noeuds). En l'absence de connexité, le reste du traitement ne peut pas être effectué.

Le module de traitement P1 s'assure ensuite de la connexité des noeuds (LSRs) en présence de chaque contrainte locale. Il est important de noter que l'on peut envisager de s'assurer directement de la connexité des noeuds en présence de contrainte(s) locale(s), sans procéder à la vérification de connexité en l'absence de contraintes.

On entend ici par « contrainte locale » toute contrainte applicable à une liaison orientée d'un réseau, telle qu'un arc, et notamment la bande passante minimale requise, la longueur maximale d'une liaison, la durée maximale d'une liaison, une ou plusieurs liaisons interdites.

Préférentiellement, cette vérification consiste à déterminer tous les couples de noeuds (LSRs) qui peuvent établir entre eux une liaison (ou un lien, défini par un couple (i,j) désignant deux noeuds) en présence de chaque contrainte locale.

La détermination des couples de noeuds s'effectue à partir de l'établissement d'un graphe de filtrage G(X,U), où X représente le jeu de noeuds LSRs du réseau et U le jeu de liens (ou liaisons) directionnels (i,j). Toutes les liaisons du graphe G(X,U) qui violent au moins l'une des contraintes locales déterminées sont éliminées dudit graphe, ce qui produit un graphe « filtré ».

Le module de traitement P1 s'assure ensuite que le graphe G(X,U) filtré est connexe (au sens mathématique du terme). Il utilise pour ce faire, préférentiellement, une technique de propagation d'information du noeud de départ LER (par exemple LER1) vers l'ensemble des noeuds LSRs du graphe filtré, de sorte que tous les noeuds LSRs soient vérifiés (ou testés). Cette vérification de la connexité du graphe peut être réalisée, par exemple, avec l'algorithme de Tarjan.

En l'absence de connexité du graphe filtré, le reste du traitement ne peut pas être effectué.

Si le graphe filtré est connexe, le module de traitement P1 calcule parmi les noeuds des couples (ou liaisons (i,j)) retenus tous les chemins possibles (ou « efficient paths ») r* entre le noeud de départ LER1 (par exemple), auquel est connecté le terminal source MS1 qui requiert l'établissement de la communication, et un noeud de destination, par exemple LER2, auquel est connecté directement ou indirectement le terminal destinataire MS2, en prenant en compte au moins les deux critères déterminés dans la table T11.

On entend ici par « chemin possible » un chemin dit «efficace » ou « Pareto-optimal » dont les valeurs de performances, sur lesquelles on reviendra plus loin, sont « non dominées ». Par ailleurs, on entend ici par « critère » tout type de critère (ou métrique) pouvant être pris en compte dans un réseau, qu'il soit de type additif, comme par exemple la durée du chemin C1 ou le nombre de sauts du chemin C3, ou de type non additif, comme par exemple la bande passante disponible C2 (qui est de surcroît de type « minimum-maximum »). Par conséquent, les critères C1 et C2 sont, préférentiellement, toujours pris en compte, tandis que le critère C3 est optionnel.

Par ailleurs, il peut être intéressant d'impacter (ou pondérer) le critère C1 (durée du chemin) par un facteur de pondération, tel qu'une pénalité portant, par exemple, sur le coût d'administration du chemin CA. Cela permet de réduire les vecteurs de calcul, sur lesquels on reviendra plus loin, d'une dimension, et par conséquent de limiter le temps de calcul et la mémoire nécessaire audit calcul.

Préférentiellement, un chemin possible r* est calculé comme indiqué ci-après. Tout d'abord, un chemin est désigné par une variable r(s,t), où s désigne le noeud source et t le noeud destinataire, ainsi que par un vecteur de performance Z(r) défini par un multiplet de composantes (Z1(r), Z2(r),..., Zp(r)) associées chacune à l'un des p critères utilisés. Par exemple, la composante Z1(r) représente la performance du chemin r par rapport au critère C1 et la composante Z2(r) représente la performance du chemin r par rapport au critère C2.

Pour un critère de type additif, tel que C1, la composante Z1(r) de la performance Z(r) est définie par la relation Z1(r) = Σ_{(i,j)∈r} Cl(i,j).

Lorsque le critère C1 est impacté (ou pondéré) par la pénalité CA, la relation précédente s'écrit Z1 (r) = Σ_{(i,j)∈r} Cl(i,j) * *CA(i, j).*

Pour un critère de type non additif, tel que C2, la composante Z2(r) de la performance Z(r) est définie par la relation Z2(r) = *MIN_{(i,j)∈r} C2(i,j).*

Ici, Cp(i,j) désigne la valeur du critère Cp pour un arc (i,j).

Compte tenu de ces définitions, un chemin est qualifié de chemin possible r*(s,t), c'est à dire « efficace », si il n'existe pas de chemin envisageable entre les noeuds s et t vérifiant la relation : Zp(r) ≤Zp(r*), ∀ p = 1 à P (où P est le nombre total de critères utilisés), et Zp'(r) < Zp'(r*) pour l'une quelconque de ces composantes p appartenant à l'ensemble {1,...,P}.

Le vecteur de performance Z(r*) du chemin r* est alors appelé solution « non dominée » (ou NDS pour « Non-Dominated Solution ») lorsque tout autre chemin r' possède un vecteur de performance Z(r') dont l'une au moins des composantes Zp(r') est « moins bonne » (ou « moins performante ») que la composante correspondante Zp(r*) du chemin r*. Un tel chemin r*, associé à un vecteur de performance non dominé, est alors appelé chemin possible (ou « efficient path ») ou « Pareto-optimal ».

Un exemple de détermination de solution non dominée (ou NDS) est illustré sur la figure 2, dans le cas de deux critères C1 et C2, de type commensurable, c'est-à-dire dont les dimensions métriques peuvent faire l'objet d'addition(s) et de multiplication(s). Cela s'applique également aux grandeurs incommensurables, telles que la bande passante C2. Cela s'applique également à des ensembles de grandeurs incommensurables entre-elles telles que la durée du chemin C1 et la bande passante C2.

Dans cet exemple, Z(r*) est une solution non dominée (ou NDS), puisqu'il n'existe pas d'autre point dont toutes les coordonnées sont strictement inférieures à celles de Z(r*). Chaque autre point Z(r) possède au moins une composante qui est moins bonne que la composante correspondante de Z(r*). En d'autres termes, le cône, matérialisé par des tirets et placé en-dessous et à gauche de Z(r*), est vide. Dans cet exemple, Z(r') est dominé par quatre points, dont Z(r*), qui se trouvent placés dans le cône matérialisé par des tirets placé en-dessous de lui, mais pas par les points extrêmes Z1 (r)_{min/C1}, associé à C1, et Z2(r)_{min/C2}, associé à C2, qui sont donc également non dominés. Seule Z(r') est ici une solution dominée. Par ailleurs, Z(r") est une solution dite « faiblement non dominée » par Z(r°) car l'une au moins des composantes de Z(r°) est égale (et non strictement inférieure) à son homologue dans Z(r").

Afin de calculer les différents chemins possibles r* obtenus par la méthode présentée ci-avant, on peut utiliser une adaptation d'un algorithme d'attribution de label, du type de celui décrit dans le document de E. Martins, « On a multi-criteria shortest path problem », European Journal Of Operational Research, Vol. 16, pages 236-245, 1984.

L'adaptation consiste, notamment, à intégrer aux critères additifs traités par l'algorithme de Martins un critère de type non additif, comme par exemple un critère de type « minimum-maximum ». L'intégration d'un tel critère impose des aménagements de l'algorithme, comme par exemple ceux mentionnés ci-dessous.

Un premier aménagement peut consister à intégrer à l'algorithme de calcul de chemins (correspondant à l'étape d) du procédé) une trace mémorisant le parcours correspondant à un chemin partiel, afin de détecter et prévenir l'apparition, dans les chemins en cours de construction, de cycles (ou boucles) lors de la progression de l'algorithme.

Un second aménagement, de préférence combiné au premier, peut consister à conserver des solutions faiblement non dominées sur le critère « minimum-maximum » lors de la procédure d'élimination des chemins partiels. Par exemple, si l'on considère trois critères C1, C2, C3 dont les deux premiers sont additifs et le troisième de type « minimum-maximum », le point z = (3, 2, 4) est dominé par le point z° = (1, 1, 4) pour les critères C1 et C2 mais faiblement non dominé pour le critère C3. z et le chemin partiel correspondant sont donc conservés. Cela permet de considérer tous les chemins efficaces possibles. Cependant, les solutions correspondant aux chemins efficaces finaux (produits à l'étape b) du procédé) sont toutes non dominées et non pas faiblement non dominées.

Tous les chemins possibles déterminés r* sont alors stockés dans une mémoire du dispositif D (non représentée), ce qui garantit que le meilleur d'entre eux, compte tenu des critères et contraintes utilisées, n'a pas été omis.

Le module de traitement P1 forme ensuite une solution idéale Z( 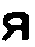 ). Plus précisément, la solution idéale Z( 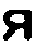 ) est un vecteur se présentant sous la forme d'un multiplet de composantes.

Ces composantes sont calculées comme suit. Pour chaque critère Cp, on extrait la meilleure valeur de performance Z*p observée sur les chemins possibles. Chaque meilleure valeur de performance Z*p observée est appelée valeur optimale associée au critère correspondant. Les différentes valeurs optimales constituent alors les composantes de la solution idéale Z( 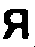 ) = (Z*1, Z*2,..., Z*p), représentative d'un chemin idéal 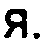

Il est important de noter que le chemin idéal 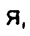 représenté par la solution idéale Z( 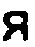 ), ne correspond pas forcément à l'un des chemins possibles r* du jeu de chemins possibles déterminés. C'est même rarement le cas, dans la mesure où les liaisons sur lesquelles sont observées les valeurs optimales constituent rarement une séquence connexe. Néanmoins, lorsque c'est le cas, il constitue l'unique chemin possible r* puisqu'il domine tous les autres.

Le module de traitement P1 soumet ensuite les différents chemins possibles à au moins une contrainte globale déterminée ou reçue.

On entend ici par « contraintes globales » des contraintes pouvant être appliquées à des chemins par opposition aux contraintes locales qui s'appliquent aux liaisons (ou liens) entre noeuds, Il pourra s'agir, par exemple, de la bande passante minimale requise, de la longueur maximale du chemin, du nombre de sauts maximal du chemin, et de la durée maximale du chemin.

Le module de traitement P1 retient les chemins possibles r* qui ne violent pas la ou les contraintes globales utilisées. Dans le cas de l'établissement d'un chemin en mode multicritères sans contrainte, ce traitement est bien entendu omis.

Le module de traitement P1 attribue ensuite à chaque chemin possible r* une valeur d'intérêt (ou « path value ») U(r) compte tenu de la solution idéale Z( 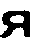 ).

A cet effet, on peut utiliser une fonction de scalarisation classique, comme par exemple une fonction de Tchebychev pondérée, fonction des différences entre les composantes Zp(r) de la valeur de performance Z(r) du chemin concerné r et les composantes correspondantes Zp( 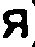 ), représentatives du chemin idéal 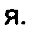 Une telle fonction peut se présenter sous la forme U(r) = MAX_{p=1 à P} {Wp(Zp(r) - Zp( 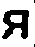 ))}, où Wp est un coefficient (ou facteur) de pondération du critère Cp choisi lors de la configuration du dispositif et permettant de donner aux critères, éventuellement, des poids relatifs différents. Cette valeur d'intérêt quantifie l'écart de performance qui sépare un chemin possible r* du chemin idéal 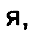 compte tenu des poids respectifs accordés aux différents critères utilisés.

Le module de traitement P1 classe ensuite les chemins possibles r* compte tenu de leurs valeurs d'intérêt U(r) respectives. Avec la définition de la valeur d'intérêt U(r) donnée ci-dessus, les chemins possibles sont classés par ordre de valeur d'intérêt croissante, la valeur d'intérêt U(r) la plus petite correspondant au chemin possible r* le mieux approprié au transfert des données, compte tenu des critères et contraintes utilisés. Le classement est donc effectué par rapport à un point idéal inféré par les données et non à partir d'une comparaison fondée sur des valeurs arbitraires.

Puis, il sélectionne parmi les chemins possibles classés les k chemins les mieux classés, de manière à router des données via l'un de ces k chemins, et de préférence celui qui est le mieux classé (valeur d'intérêt U(r) la plus petite dans l'exemple décrit). K est un entier qui peut être compris, par exemple, entre 1 et 5. Il est important de noter que le nombre de chemins trouvés par le traitement décrit ci-avant peut être inférieur à k.

Le module de traitement Pn peut également sélectionner un second chemin parmi les k chemins possibles classés, de manière à offrir un chemin de secours (ou « backup LSP ») pouvant être substitué au premier chemin en cas de problème sur ce chemin. Il est cependant préférable que le (second) chemin de secours soit disjoint du (premier) chemin. Cela permet notamment de mettre à la disposition de l'abonné la fonction de protection / restauration de liaison.

Les chemins possibles peuvent être utilisés dans le cadre de ce que l'homme de l'art appelle la répartition de charge.

Une fois le chemin de commutation sélectionné, le module de traitement P1 associe au flux à commuter une étiquette représentative dudit chemin. Le routeur périphérique de départ LER1 peut alors établir le chemin sélectionné en réservant les ressources qui satisfont aux critères et contraintes associés au flux reçu. Puis, il transmet le flux étiqueté à destination du routeur périphérique de destination LER2, via chaque noeud LSR du chemin déterminé.

Il est important de noter que le module de traitement P peut être agencé de manière à calculer des chemins commutés de type bidirectionnel. Cela est notamment utile dans le cas de réseaux de type GMPLS.

Dans le cas des réseaux de type GMPLS, des attributs différents et/ou complémentaires de ceux présentés ci-avant peuvent être utilisés, afin de tenir compte de leurs spécificités respectives (réseaux à multiplexage temporel (ou TDM pour « Time Division Multiplexing »), comme par exemple les réseaux SONET et SDH, et les réseaux à multiplexage de longueurs d'onde (ou WDM pour « Wavelength Division Multiplexing »). Par exemple, dans le cas des réseaux à commutation de longueurs d'onde, la transparence peut être optimisée en minimisant le nombre de sauts d'un chemin compte tenu d'une contrainte liée à la distance maximale possible sans dégradation de signal. D'une manière générale, les attributs spécifiques peuvent refléter les capacités des liaisons, transmises par l'intermédiaire de TLVs de bas niveau et désignant par exemple un multiplexage de longueurs d'onde, une concaténation, une allocation ou une protection de commutation dans le cas de circuits SDH.

Le dispositif de calcul D, et principalement son (ou ses) module(s) de traitement P, ainsi qu'éventuellement la (ou les) mémoire(s) M, peuvent être réalisés sous la forme de circuits électroniques, de modules logiciels (ou informatiques), ou d'une combinaison de circuits et de logiciels.

Dans ce qui précède, il a été question de critères et contraintes (locales et globales), qui peuvent sembler, dans certains cas, sensiblement identiques. En fait, ils peuvent être considérés comme des attributs de sélection qui se matérialisent parfois sous la forme de critères, parfois sous la forme de contraintes, sachant qu'un critère fait généralement l'objet d'une maximisation ou d'une minimisation tandis qu'une contrainte est généralement définie par une ou deux valeurs, fixées ou limitatives.

Ces attributs de sélection sont définis par l'opérateur du réseau lors de la configuration du réseau, et dépendent du type de service requis, par exemple l'envoi d'un e-mail ou une demande d'établissement de visioconférence, et/ou de la qualité de service (ou QoS) requise lors de la réservation initiale de ressources. Plus précisément encore, on choisit les critères en fonction du type de service requis, tandis que l'on choisit les contraintes, et leurs valeurs, en fonction de la qualité de service requise.

L'invention peut être également considérée sous la forme d'un procédé de détermination de chemin(s) de commutation de flux de données dans un réseau de communications à commutation d'étiquettes comportant une multiplicité de noeuds (LSRs) dont des noeuds périphériques (LERs) et des noeuds de coeur (LCRs).

Ce procédé peut être mis en oeuvre à l'aide du dispositif de calcul D présenté ci-avant. Les fonctions et sous-fonctions principales et optionnelles assurées par les étapes de ce procédé étant sensiblement identiques à celles assurées par les différents moyens constituant le dispositif D, seules seront résumées ci-après les étapes mettant en oeuvre les fonctions principales du procédé selon l'invention.

Ce procédé comprend la combinaison d'étapes suivante :
a) prévoir une table de correspondance Tn1 entre des ensembles de données de service (par exemple représentatifs d'un type de service et/ou d'une qualité de service) et des données d'informations représentatives d'au moins deux critères choisis (ainsi qu'éventuellement des facteurs de pondération), et une structure descriptive Tn2 de données d'informations représentatives de l'état d'utilisation et de la topologie du réseau,
b) à réception d'une requête d'établissement de chemin contenant un ensemble de données de service associé à un flux à commuter, déterminer dans la table Tn1 au moins deux critères stockés en correspondance de cet ensemble de données de service associé au flux,
c) s'assurer, à partir des données d'informations qui sont stockées dans la structure Tn2, de la connexité de la multiplicité de LSRs,
d) parmi les noeuds, calculer des chemins possibles entre un LER de départ et un LER de destination, compte tenu d'au moins les deux critères déterminés à l'étape b), puis déduire une solution idéale à partir de performances des chemins possibles sur au moins les critères,
e) attribuer à chaque chemin possible une valeur d'intérêt compte tenu de la solution idéale, puis classer ces chemins possibles compte tenu de leurs valeurs d'intérêt respectives, et
f) sélectionner un chemin parmi les chemins possibles classés, puis associer au flux à commuter une étiquette représentative du chemin sélectionné afin de commuter ce flux étiqueté via ce chemin vers le LER de destination.

L'invention ne se limite pas aux modes de réalisation de procédés, dispositifs et routeurs périphériques décrits ci-avant, seulement à titre d'exemple, mais elle englobe toutes les variantes que pourra envisager l'homme de l'art dans le cadre des revendications ci-après.

Ainsi, dans ce qui précède, il a été décrit un mode de fonctionnement dans lequel on prenait en compte des critères (au moins deux), au moins une contrainte locale et au moins une contrainte globale. Mais, d'autres modes de fonctionnement peuvent être envisagés. On peut en effet envisager un mode de fonctionnement dans lequel on prend en compte des critères (au moins deux) et au moins une contrainte locale, sans contrainte globale. On peut également envisager un autre mode de fonctionnement dans lequel on prend en compte des critères (au moins deux) et au moins une contrainte globale, sans contrainte locale. Enfin, comme évoqué précédemment, on peut également envisager un mode de fonctionnement dans lequel on ne prend en compte que des critères (au moins deux).

Par ailleurs, dans ce qui précède il a été question de routeurs périphériques équipés chacun d'un module de traitement et d'une mémoire de données de service et d'informations constituant en combinaison un dispositif selon l'invention. Mais, on peut envisager de n'implanter dans chaque routeur périphérique qu'un module de traitement et de prévoir une mémoire partagée comprenant toutes les données de service et d'informations, par exemple implantée dans un serveur dédié du réseau ou dans le NMS. De même on peut envisager un module de traitement partagé et une mémoire partagée comprenant toutes les données de service et d'informations, par exemple implantés dans un serveur dédié du réseau ou dans le NMS.

## Revendications

1. Dispositif de détermination d'un ou de plusieurs chemins de commutation de flux de données étiquetés dans un réseau de communications à commutation d'étiquettes comportant une multiplicité de noeuds de commutation d'étiquettes (LCR1, LGR2, LCR3, LCR4, LER1, LER2, LER3), chaque flux étant associé à une classe d'équivalence de transmission choisie et à un ensemble de données de service choisi, **caractérise en ce qu'**il comporte :
des moyens de mémorisation (M1, M2) propres a stocker une table (T11, T21) de correspondance entre des ensembles de données de service et des données d'informations représentatives d'au moins deux critères choisis, et une structure descriptive (T12, T22) contenant des données d'informations représentatives d'un état d'utilisation et d'une topologie du réseau, lesdites données de service définissant le type de service et/ou la qualité de service,
- des moyens de traitement (P1, P2) agencés :
a) à réception d'une requête d'établissement de chemin contenant un ensemble de données de service associé à un flux à commuter, pour déterminer dans ladite table (T11, T21) au moins deux critères stockés en correspondance dudit ensemble de données de service associé au flux,
b) pour s'assurer de la connexité de ladite multiplicité de noeuds, à partir des données d'informations stockées dans ladite structure descriptive (T12, T22),
c) pour calculer parmi lesdits noeuds (LCR1, LCR2, LCR3, LCR4, LER1. LER2, LER3) des chemins possibles r* entre un noeud de départ (LER1) et un noeud de destination (LER2), compte tenu d'au moins lesdits deux critères déterminés, puis pour déduire une solution idéale (Z( 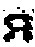 )) à partir de performances (z(r*)) desdits chemins possibles r* sur au moins lesdits critères,
d) pour attribuer à chaque chemin possible r* une valeur d'intérêt U(r) compte tenu de ladite solution idéale (Z( 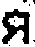 )), puis classer lesdits chemins possibles compte tenu de leurs valeurs d'intérêt respectives, et
e) sélectionner un chemin parmi lesdits chemins possibles classés, puis associer audit flux à commuter une étiquette représentative dudit chemin sélectionné de sorte que ce flux-étqueté soit commuté via ledit chemin vers le noeud de destination (LER2).

2. Dispositif selon la revendication 1, **caractérisé en ce que** certaines desdites données d'informations, associées à un ensemble de données de service, étant représentatives d'au moins une contrainte locale, lesdits moyens de traitement (P1, P2) sont agencés pour déterminer parmi ladite multiplicité de noeuds (LCR1, LCR2, LCR3, LCR4, LER1, LER2, LER3) tous les couples de noeuds pouvant établir entre eux une liaison orientée supportant chaque contrainte locale stockée en correspondance d'un ensemble de données de service associé audit flux à commuter, puis pour s'assurer de la connexité de l'ensemble des noeuds desdits couples.

3. Dispositif selon la revendication 1, **caractérisé en ce que** certaines desdites données d'informations, associées à un ensemble de données de service, étant représentatives d'au moins une contrainte globale, lesdits moyens de traitement (P1, P2) sont agencés pour retenir parmi lesdits chemins possibles r* ceux qui satisfont à chaque contrainte globale stockée en correspondance d'un ensemble de données de service associé audit flux à commuté, de manière à n'attribuer des valeurs d'intérêt U(r) qu'auxdits chemins possibles retenus r*.

4. Dispositif selon la revendication 1, **caractérisé en ce que** l'un au moins desdits critères est de type non additif.

5. Dispositif selon la revendication 4, **caractérisé en ce que** lesdits moyens de traitement (P1, P2) sont agencés pour intégrer, lors du calcul des chemins possibles r* et de la déduction de ladite solution idéale Z( 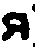 ), une trace mémorisant un parcours correspondante un chemin partiel, de manière à détecter et prévenir l'apparition de cycles dans les chemins en cours de construction.

6. Dispositif selon la revendication 5, **caractérisé en ce que** lesdits moyens de traitement (P1, P2) sont agencés pour conserver des solutions, dites « faiblement non dominées » sur chaque critère déterminé, non additif, lors de la procédure d'élimination desdits chemins partiels.

7. Dispositif selon la revendication 1, **caractérisé en ce que** lesdits moyens de traitement (P1, P2) sont agencés pour vérifier ladite connexité en appliquant un mécanisme de propagation du noeud de départ (LER1) vers tous les autres noeuds (LCR1, LCR2, LCR3, LCR4, LER1, LER2, LER3) de ladite multiplicité de noeuds, de sorte que chaque noeud (LCR1, LCR2, LCR3, LCR4, LER1, LER2, LER3) soit visité.

8. Dispositif selon la revendication 1, **caractérisé en ce que** lesdits moyens de traitement (P1) sont agencés pour déterminer pour chaque chemin des valeurs représentatives de sa « performance » Z(r) par rapport à chaque critère déterminé, et pour qualifier de chemin possible r* un chemin (r) dont lesdites valeurs de performance Z(r) sont dites « non dominées ».

9. Dispositif selon la revendication 8, **caractérisé en ce que** lesdits moyens de traitement (P1, P2) sont agencés pour déterminer pour chaque critère déterminé la meilleure valeur de performance Z*(r) observée sur lesdits chemins possibles, dite « valeur optimale », puis pour construire ladite solution idéale Z( 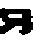 ) sous la forme d'un multiplet de composantes constituées des différentes valeurs optimales déterminées.

10. Dispositif selon la revendication 9, **caractérisé en ce que** lesdits moyens de traitement (P1, P2) sont agencés pour attribuer une valeur d'intérêt U(r) à chaque chemin possible r lorsqu'elle caractérise la plus grande valeur des composantes, associées aux différents critères déterminés, d'une fonction de Tchebychev pondérée, fonction des différences entre la performance dudit chemin possible r* et la valeur optimale correspondance de ladite solution idéale Z( 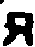 ).

11. Dispositif selon la revendication 10, **caractérisé en ce que** lesdits moyens de traitement (P1, P2) sont agencés pour effectuer une présélection de k chemins possibles présentant les k plus petites valeurs d'intérêt U(r), puis pour sélectionner un chemin parmi ces k chemins présélectionnés.

12. Dispositif selon la revendication 11, **caractérisé en ce que** lesdits moyens de traitement (P1, P2) sont agencés pour calculer des chemins de type bidirectionnel.

13. Dispositif selon la revendication 11, **caractérisé en ce que** lesdits moyens de traitement (P1, P2) sont agencés pour sélectionner parmi lesdits k chemins au moins un autre chemin dédié à la restauration de liaison.

14. Dispositif selon la revendication 2, **caractérisé en ce que** lesdites contraintes locales et/ou globales déterminées appartiennent à un groupe comprenant au moins la bande passante minimale requise, la longueur maximale du chemin, la durée maximale du chemin, un ensemble de liaisons interdites ou obligatoires, le nombre maximal et/ou minimal de sauts du chemin, un ou plusieurs, noeud(s) obligatoire(s), un ou plusieurs noeud(s) interdit(s), au moins une classe de service autorisée, un ensemble de couleurs de chemin, une capacité de muitiplexage en longueurs d'onde, une capacité de concaténation, une capacité d'allocation et une capacité de protection.

15. Dispositif selon la revendication 1, **caractérisé en ce que** lesdits critères appartiennent à un groupe comprenant au moins la bande passante disponible C2, le nombre de sauts du chemin C3, la durée du chemin C1, une capacité de multiplexage en longueur d'onde, une capacité de concaténation, une capacité d'allocation et une capacité de protection.

16. Dispositif selon la revendication 15, **caractérisé en ce que** lesdits critères comprennent la bande passante disponible C2 et la durée du chemin C1.

17. Dispositif selon la revendication 16, **caractérisé en ce que** lesdits moyens de traitement (P1, P2) sont agencés pour impacter ledit critère portant sur la durée du chemin C1 par une pénalité.

18. Dispositif selon la revendication 17, **caractérisé en ce que** ladite pénalité porte sur le coût d'administration du chemin CA.

19. Dispositif selon la revendication 1, **caractérisé en ce que** ladite table de correspondance (T11, T21), comprend des facteurs de pondération associés à certains au moins desdits critères en fonction de leur importance.

20. Routeur de commutation d'étiquettes LER pour un réseau de communications à commutation d'étiquettes, **caractérisé en ce qu'**il comprend un dispositif selon l'une des revendications 1 à 19.

## Claims

1. A device for determining one or more labelled data flow switching paths in a label-switched communications network comprising a multiplicity of label switching nodes (LCR1, LCR2, LCR3, LER1, LER2, LER3), each flow being associated with a chosen transmission equivalency class and with a chosen service data set, **characterized in that** it comprises:
- memorization means (M1, M2) capable of storing a lookup table (T11, T21) that matches service data sets and information data representative of at least two chosen criteria, and a descriptive structure (T12, T22) containing information data representative of a usage state and a topology of the network, said service data defining the type of service and/or the quality of service,
- processing means (PI P2) operative:
a) when receiving a request to establish a path containing a service data set associated with a flow to be switched, to determine within said table (T11, T21) at least two criteria stored as a match for said service data set associated with the flow;
b) to ensure that said multiplicity of nodes is connected, based on information data stored within said descriptive structure (T12, T22),
c) to calculate from among said nodes (LCR1, LCR2, LCR3, LCR4, LER1, LER2, LER3) efficient paths r* between a starting node (LER1) and a destination node (LER2), in consideration of at least said two determined criteria, then for an ideal solution (Z( 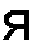 )) based on efficiencies (Z(r*)) of said efficient paths r* on at least said criteria,
d) to assign each efficient path r* a path value U(r) in consideration of said ideal solution (Z( 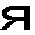 )), then to rank said efficient paths in consideration of their respective path values, and
e) to select one path from among said possible ranked paths, then to associate with said flow to be switched a label representative of said selected path so that that labelled flow is switched via said path towards the destination node (LER2).

2. A device according to claim 1, **characterized in that** some of said information data, associated with a service data set, being representative of at least one local restriction, said processing means (P1, P2) are operative to determine from among said multiplicity of nodes (LCR1, LCR2, LCR3, LCR4, LER1, LER2, LER3) all the pairs of nodes that may establish an oriented link between them that supports each local restriction stored as a match for a service data set associated with said flow to be switched, then to ensure that all of the nodes of said pairs are connected.

3. A device according to claim 1, **characterized in that** some of said information data, associated with a service data set, being representative of at least one global restriction, said processing means (P1, P2) are operative to retain from among said efficient paths r* those which satisfy each global restriction stored as a match for a service data set associated with said flow to be switched, so as to assign path values U(r) only to said retained efficient paths r*.

4. A device according to claim 1, **characterized in that** at least one of said criteria is non-additive.

5. A device according to claim 4, **characterized in that** said processing means (P1, P2) are operative to integrate, when calculating the efficient paths r* and deducing said ideal solution Z( 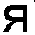 ), a track saving a route that corresponds to a partial path, so as to detect and prevent the appearance of cycles in the paths being built.

6. A device according to claim 5, **characterized in that** said processing means (P1, P2) are operative to save so-called "weakly undominated" solutions for each determined non-additive criterion, during the procedure of eliminating said partial paths.

7. A device according to claim 1, **characterized in that** said processing means (P1, P2) are operative to verify said connectedness by applying a propagation mechanism from the starting node (LER1) to all the other nodes (LCR1, LCR2 LCR3, LCR4, LER1, LER2, LER3) of said multiplicity of nodes, so that each node (LCR1, LCR2, LCR3, LCR4, LER1, LER2, LER3) is visited.

8. A device according to claim 1, **characterized in that** said processing means (P1) are operative to determine, for each path, values representative of its "efficiency" Z(r) in relation to each determined criterion, and to qualify as an efficient path r* a path (r) whose said efficiency values Z(r) are said to be "non-dominated".

9. A device according to claim 8, **characterized in that** said processing means (P1, P2) are operative to determine for each determined criterion the best efficiency value Z*(r) observed on said efficient paths, called the "optimal value", and then to build said ideal solution Z( 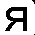 ) in the form of a byte of components constituted by different determined optimal values.

10. A device according to claim 9, **characterized in that** said processing means (P1, P2) are operative to assign a path value U(r) to each efficient path r when it characterizes the greatest value of the components, associated with the different determined criteria, of a weighted Chebyshev function, a function of the differences between the efficiency of said efficient path r* and the corresponding optimal value of said ideal solution Z( 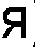 ).

11. A device according to claim 10, **characterized in that** said processing means (P1, P2) are operative to make a pre-selection of k efficient paths exhibiting the k lowest path values U(r), then to select one path from among those k preselected paths.

12. A device according to claim 11, **characterized in that** said processing means (P1, P2) are operative to calculate bidirectional paths.

13. A device according to claim 11, **characterized in that** said processing means (P1, P2) are operative to select from among said k paths at least one other path dedicated to link restoration.

14. A device according to claim 2, **characterized in that** said determined local and/or global restrictions belong to a group comprising at least the minimum required bandwidth, the maximum length of the path, the maximum duration of the path, a set of prohibited or mandatory links, the maximum and/or minimum number of hops in the path, one or more mandatory node(s), one or more prohibited node(s), at least one authorized service class, a set of path colors, a wavelength division multiplexing capacity, a concatenation capacity, an allocation capacity, and a protection capacity.

15. A device according to claim 1, **characterized in that** said criteria belong to a group comprising at least the available bandwidth C2, the number of hops in the path C3, the duration of the path C1, a wavelength division multiplexing capacity, a concatenation capacity, an allocation capacity, and a protection capacity.

16. A device according to claim 15, **characterized in that** said criteria comprise the available bandwidth C2 and the duration of the path C1.

17. A device according to claim 16, **characterized in that** said processing means (P1, P2) are operative to assign a penalty to said criterion related to the duration of the path C1,

18. A device according to claim 17, **characterized in that** said penalty relates to the administrative cost of the path C1;.

19. A device according to claim 1, **characterized in that** said lookup table (T11, T21) comprises weighting factors associated with at least some of said criteria based on their importance.

20. A label edge router LER for a label-switched communications network, **characterized in that** it comprises a device according to one of the claims 1 to 19.

## Patentansprüche

1. Vorrichtung zur Ermittlung eines oder mehrerer Nachrichtenpfade für etikettierte Datenflüsse in einem etikettvermittelndem Kommunikationsnetzwerk mit einer Vielzahl von etikettvermittelnden Knoten (LCR1, LCR2 LCR3, LCR4, LER1, LER2, LER3), wobei jeder Datenfluss mit einer gewählten Übertragungsäquivalenzklasse und einer gewählten Gruppe von Dienstdaten assoziiert ist, **dadurch gekennzeichnet, dass** sie umfasst:
- Speichermittel (M1,.M2) zum Speichern einer Zuordnungstabelle (T11, T21) für Gruppen von Dienstdaten und Informationsdaten, welche für mindestens zwei ausgewählte Kriterien repräsentativ sind, und eine kennzeichnende Struktur (T12, T22), welche Informationsdaten enthält, die für einen Nutzungszustand und eine Topologie des Netzwerks repräsentativ sind, wobei die besagten Dienstdaten den Typ des Dienstes und/oder die Dienstgüte definieren,
- Verarbeitungsmittel (P1, P2), dazu ausgelegt, um:
a) Bei Empfang einer Pfadaufbauanforderung, welche eine mit einem zu vermittelnden Datenfluss assoziierte Gruppe von Dienstdaten enthält, in der besagten Tabelle (T11, T21) mindestens zwei gespeicherte Kriterien zu ermitteln, welche der besagten mit dem besagten Datenfluss assoziierten Gruppe von Dienstdaten entsprechen;
b) ausgehend von den in der besagten kennzeichnenden Struktur (T12, T22) gespeicherten Informationsdaten die Verbindungsfähigkeit der besagten Vielzahl von Knoten sicherzustellen ,
c) unter den besagten Knoten (LCR1, LCR2, LCR3, LCR4, LER1, LER2, LER3) die möglichen Pfade r* zwischen einem Startknoten (LER1) und einem Zielknoten (LER2) zu berechnen, unter Berücksichtigung zumindest der besagten zwei ermittelten Kriterien, und anschließend aus den Leistungen (Z(r*)) der besagten möglichen Pfade r* und basierend auf zumindest den besagten Kriterien eine ideale Lösung abzuleiten,
d) jedem möglichen Pfad r* unter Berücksichtigung der besagten idealen Lösung (Z( 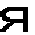 )) einen Interessewert U(r) zuzuordnen und die möglichen Pfade anschließend unter Berücksichtigung der jeweiligen Interessewerte zu sortieren, und
e) unter den besagten sortierten möglichen Pfaden einen Pfad auszuwählen und dem besagten zu vermittelnden Datenfluss anschließend ein Etikett, welches für den besagten ausgewählten Pfad repräsentativ ist, zuzuordnen, so dass dieser etikettierte Datenfluss über den besagten Pfad an den Zielknoten (LER2) vermittelt wird.

2. Vorrichtung nach Anspruch 1, **dadurch gekennzeichnet, dass**, da bestimmte der besagten mit einer Gruppe von Dienstdaten assoziierten Informationsdaten für mindestens eine lokale Beanspruchung repräsentativ sind, die besagten Verarbeitungsmittel (P1, P2) dazu eingerichtet sind, unter der Vielzahl von Knoten (LCR1, LCR2, LCR3, LCR4, LER1, LER2, LER3) alle Knotenpaare zu ermitteln, welche untereinander eine orientierte Verbindung, die jede gespeicherte, einer Gruppe von mit dem besagten zu vermittelnden Datenfluss assoziierten Dienstdaten entsprechende lokale Beanspruchung unterstützt, aufbauen können, und anschließend die Verbindungsfähigkeit der Gruppe von Knoten der besagten Knotenpaare sicherzustellen.

3. Vorrichtung nach Anspruch 1, **dadurch gekennzeichnet, dass**, da bestimmte der besagten mit einer Gruppe von Dienstdaten assoziierten Informationsdaten für mindestens eine lokale Beanspruchung repräsentativ sind, die besagten Verarbeitungsmittel (P1, P2) dazu eingerichtet sind, unter den besagten möglichen Pfaden r* diejenigen zu berücksichtigen, welche jede gespeicherte, einer Gruppe von mit dem besagten zu vermittelnden Datenfluss assoziierten Dienstdaten entsprechende globale Beanspruchung erfüllen, so dass nur den besagten berücksichtigten möglichen Pfaden r* Interessewerte U(r) zugeordnet werden.

4. Vorrichtung nach Anspruch 1, **dadurch gekennzeichnet, dass** zumindest eines der besagten Kriterien vom Typ "nicht additiv" ist.

5. Vorrichtung nach Anspruch 4, **dadurch gekennzeichnet, dass** die besagten Verarbeitungsmittel (P1, P2) dazu ausgelegt sind, während der Berechnung der möglichen Pfade r* und der Ableitung der besagten idealen Lösung Z( 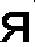 ) eine Protokollierung zu integrieren, welche eine einem Teilpfad entsprechende Strecke speichert, um das Auftreten von Zyklen in den sich in Aufbau befindlichen Pfaden zu erkennen und diesem vorzubeugen.

6. Vorrichtung nach Anspruch 5, **dadurch gekennzeichnet, dass** die besagten Verarbeitungsmittel (P1, P2) dazu eingerichtet sind, während des Vorgangs der Eliminierung der besagten Teilpfade sogenannte "schwach nicht dominierte" Lösungen für jedes ermittelte, nicht additive, Kriterium beizubehalten.

7. Vorrichtung nach Anspruch 1, **dadurch gekennzeichnet, dass** die besagten Verarbeitungsmittel (P1, P2) dazu eingerichtet sind, die besagte Verbindungsfähigkeit durch Anwenden eines Ausbreitungsmechanismus vom Startknoten (LER1) zu allen anderen Knoten (LCR1, LCR2 LCR3, LCR4, LER1, LER2, LER3) der besagten Vielzahl von Knoten zu prüfen, so dass jeder Knoten (LCR1, LCR2, LCR3, LCR4, LER1, LER2, LER3) besucht wird.

8. Vorrichtung nach Anspruch 1, **dadurch gekennzeichnet, dass** die besagten Verarbeitungsmittel (P1) dazu eingerichtet sind, für jeden Pfad Werte zu ermitteln, welche für dessen "Leistung" Z(r) im Verhältnis zu jedem ermittelten Kriterium repräsentativ sind, und einen Pfad (r), dessen besagte Leistungswerte Z(r) sogenannte "nicht dominierte" Werte sind, als möglichen Pfad r* zu qualifizieren.

9. Vorrichtung nach Anspruch 8, **dadurch gekennzeichnet, dass** die besagten Verarbeitungsmittel (P1, P2) dazu eingerichtet sind, für jedes definierte Kriterium den auf den besagten möglichen Pfaden beobachteten besten Leistungswert Z*(r), den sogenannten "optimalen Wert", zu ermitteln, und die besagte ideale Lösung Z( 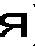 ) in der Form eines aus den verschiedenen ermittelten optimalen Werten bestehenden Komponentenbytes zu konstruieren.

10. Vorrichtung nach Anspruch 9, **dadurch gekennzeichnet, dass** die besagten Verarbeitungsmittel (P1, P2) dazu eingerichtet sind, jedem möglichen Pfad r einen Interessewert U(r) zuzuordnen, wenn dieser den größten Wert der Komponenten, die mit den verschiedenen ermittelten Kriterien assoziiert sind, einer gewichteten Tschebyschow-Funktion, Funktion der Differenzen zwischen der Leistung des besagten möglichen Pfads r* und dem entsprechenden optimalen Wert der besagten ideale Lösung Z( 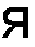 ), kennzeichnet.

11. Vorrichtung nach Anspruch 10, **dadurch gekennzeichnet, dass** die besagten Verarbeitungsmittel (P1, P2) dazu ausgelegt sind, eine Vorauswahl von k möglichen Pfaden, welche die k kleinsten Interessewerte U(r) aufweisen, vorzunehmen und anschließend einen Pfad unter den k vorausgewählten Pfaden auszuwählen.

12. Vorrichtung nach Anspruch 11, **dadurch gekennzeichnet, dass** die besagten Verarbeitungsmittel (P1, P2) dazu eingerichtet sind, Pfade vom Typ bidirektional zu berechnen.

13. Vorrichtung nach Anspruch 11, **dadurch gekennzeichnet, dass** die besagten Verarbeitungsmittel (P1, P2) dazu eingerichtet sind, unter den besagten k Pfaden mindestens einen anderen, für die Wiederherstellung der Verbindung bestimmten Pfad auszuwählen.

14. Vorrichtung nach Anspruch 2, **dadurch gekennzeichnet, dass** die besagten ermittelten lokalen und/oder globalen Beanspruchungen einer Gruppe zumindest bestehend aus der minimalen Bandbreitenanforderung, der maximalen Länge des Pfades, der maximalen Dauer des Pfades, einer Menge von verbotenen oder vorgegebenen Verbindungen, der maximalen und/oder minimalen Anzahl von Pfadsprüngen, einem oder mehreren vorgegebenen Knoten, einem oder mehreren verbotenen Knoten, mindestens einer zulässigen Dienstklasse, einer Menge von Pfadfarben, einer Wellenlängen-Multiplexfähigkeit, einer Verknüpfungsfähigkeit, einer Zuordnungsfähigkeit und einer Schutzfähigkeit, angehören.

15. Vorrichtung nach Anspruch 1, **dadurch gekennzeichnet, dass** die besagten Kriterien einer Gruppe zumindest bestehend aus der verfügbaren Bandbreite C2, der Anzahl der Pfadsprünge C3, der Dauer des Pfades C1, einer Wellenlängen-Multiplexfähigkeit, einer Verknüpfungsfähigkeit, einer Zuordnungsfähigkeit und einer Schutzfähigkeit, angehören.

16. Vorrichtung nach Anspruch 15, **dadurch gekennzeichnet, dass** die besagten Kriterien die verfügbare Bandbreite C2 und die Dauer des Pfades C1 umfassen.

17. Vorrichtung nach Anspruch 16, **dadurch gekennzeichnet, dass** die besagten Verarbeitungsmittel (P1, P2) dazu eingerichtet sind, das besagte Kriterium, welches sich auf die Dauer des Pfads C1 bezieht, durch eine Strafe zu beeinflussen.

18. Vorrichtung nach Anspruch 17, **dadurch gekennzeichnet, dass** sich die besagte Strafe auf die Verwaltungskosten des Pfades C1 beziehen.

19. Vorrichtung nach Anspruch 1, **dadurch gekennzeichnet, dass** die besagte Zuordnungstabelle (T11, T21) mit zumindest bestimmten der besagten Kriterien je nach deren Relevanz assoziierte Wichtungsfaktoren umfasst.

20. Etikettvermittlungs-Router LER für ein etikettvermittelndes Kommunikationsnetzwerk, **dadurch gekennzeichnet, dass** er eine Vorrichtung gemäß einem der Ansprüche 1 bis 19 umfasst.
